# FASCICULE DE BREVET EUROPEEN

(11) **EP 3 870 453 B1**
(45) Date de publication et mention de la délivrance du brevet: **04.12.2024**
(21) Numéro de dépôt: 19787304.5
(22) Date de dépôt: 22.10.2019
(51) Int. Cl.: B42D 25/324, B42D 25/328, G02B 5/18

(54) **ÉLÉMENT DE SÉCURITÉ POUR UN DOCUMENT-VALEUR, SON PROCÉDÉ DE FABRICATION ET DOCUMENT-VALEUR QUI LE COMPORTE**
SICHERHEITSELEMENT FÜR EIN WERTDOKUMENT, VERFAHREN ZU SEINER HERSTELLUNG UND DIESES ENTHALTENDES WERTDOKUMENT
SECURITY ELEMENT FOR A VALUABLE DOCUMENT, METHOD FOR PRODUCING SAME AND VALUABLE DOCUMENT THAT COMPRISES IT

(30) Priorité: 22.10.2018 FR 1859737
(43) Date de publication de la demande: 01.09.2021
(73) Titulaire: Oberthur Fiduciaire SAS, 75008 Paris (FR)
(72) Inventeur: BORDE, Xavier, 35410 OSSE (FR); GILLOT, Julien, 35410 CHATEAUGIRON (FR); CHAPEAU, Guillaume, 35340 ERCE PRES LIFFRE (FR)
(74) Mandataire: Regimbeau
(86) Numéro de dépôt international: PCT/EP2019/078765
(87) Numéro de publication internationale: WO 2020/083938

(56) Documents cités:
- FR-A1- 2 942 811

## Description

### DOMAINE DE L'INVENTION

La présente invention se rapporte à un élément de sécurité pour un document-valeur. Elle concerne aussi un procédé de fabrication d'un tel élément de sécurité ainsi qu'un document-valeur qui comporte au moins un tel élément de sécurité.

### ARRIERE-PLAN TECHNOLOGIQUE DE L'INVENTION

Les sécurités dites de premier niveau, c'est-à-dire celles qui sont visibles sans équipement supplémentaire, sont des remparts efficaces contre les contrefaçons de documents de sécurité ou documents-valeur tels que les billets de banque.

Aussi, les fabricants de ce type de documents se concentrent sur la réalisation de ces sécurités en veillant à ce qu'elles restent très intuitives dans leur fonctionnement mais complexes à réaliser sans le savoir-faire et les équipements idoines et, bien entendu, impossible à contrefaire. Cela implique que les technologies utilisées pour leur réalisation soient difficiles d'accès pour le grand public et que la mise en oeuvre de ces outils soit restreinte et/ou dédiée aux métiers spécifiques de la sécurisation de documents.

En effet, il s'agit d'éléments facilement authentifiables par tous et qui permettent à chacun d'authentifier un document tel qu'un billet de banque.

On connaît par le document FR-A-2942811 le préambule de la revendication 1 ou une technique de formation d'un élément de sécurité comprenant un réseau de lignes en relief, chacune comportant au moins un flanc dont l'angle d'inclinaison varie graduellement le long de cette ligne de manière à former en réflexion lumineuse un effet optique dégradé qui change en fonction de l'angle d'observation de cet élément.

Ce document enseigne notamment la réalisation d'une plaque pour impression taille douce réalisée au moyen d'une gravure au laser ou d'un outil de fraisage mécanique de précision comportant en négatif le réseau de lignes évoqué ci-dessus.

Cette plaque est utilisée comme moyen d'embossage d'un support de type papier comportant une surface réfléchissante, par exemple de type encre iridescente ou à changement de couleur. Dans un mode alternatif, on peut également recouvrir (napper) d'encre une surface préalablement embossée.

Plus particulièrement, la largeur d'une ligne du réseau est comprise entre 10 µm et 2 mm et de préférence entre 100 µm et 1 mm, avec une hauteur comprise entre 0 et 200 µm.

En pratique, on utilise une largeur de ligne de 400 µm et une hauteur variant de 0 à 100 µm avec un pas, c'est-à-dire le déplacement minimum de l'outil de gravure et une taille de « pinceau » laser (zone effectivement active de gravure) qui correspondent aux résolutions des outils de gravure traditionnellement utilisés pour la gravure de plaques taille-douce.

Ces dimensions sont bien entendu calculées pour permettre d'obtenir un effet visuel lorsque le document est incliné, de préférence d'un angle de l'ordre de + 90° à - 90°, et plus préférentiellement d'un angle de l'ordre de + 30° à - 30° ce qui correspond à l'inclinaison classique d'un billet de banque lors de son inspection.

Cet élément de sécurité est effectif sur une portion de l'ordre de 2 cm², étant entendu que l'on entend par le terme "portion" la surface préconisée sur laquelle s'étend le système afin d'être visible de manière confortable par un utilisateur.

Ceci représente au moins 50 lignes gravées adjacentes (par exemple sur un côté de 2 cm) dans une direction perpendiculaire à la direction d'extension principale du réseau.

Ces dimensions représentent également les limites de gravure de l'outil utilisé pour créer la gravure. En effet, lorsqu'on observe à l'échelle microscopique les gravures réalisées, celles-ci présentent un état de surface très perturbé. Les flancs et les fonds de gravure ne sont pas lisses et présentent des aspérités et boursouflures difficilement maîtrisables. Ces défauts sont formés au cours des étapes de gravure, par fusion partielle du matériau gravé au laser ou par des bourrelets, des résidus de fraisage.

Par ailleurs, comme évoqué plus haut le pas relativement grand de déplacement de l'outil de gravure et la résolution c'est-à-dire la taille du « pinceau » laser - de l'ordre de 3 à 5 µm - (selon des résolutions respectives de 8000 à 5080 dpi) limitent la formation d'une surface lisse et favorise la formation de facettes contigües, plutôt discontinues et séparées entre elles par des bords plutôt saillants.

Enfin, les dimensions de ces structures sont adaptées au support sur lequel elles sont appliquées, c'est-à-dire du papier. Ce dernier présente lui-même une certaine rugosité de surface qui est du même ordre de grandeur que celui de la gravure ce qui aboutit à une perte en ligne de la qualité de l'effet optique recherché entre la création des structures sur un logiciel et le résultat final.

Il est donc apparu un besoin d'amélioration de cet élément de sécurité visant notamment à le miniaturiser et à maximiser les performances optiques de ce dernier. On entend par "miniaturisation" la visibilité de l'effet optique obtenu avec des structures au moins 10 fois plus petites (en largeur et en hauteur/profondeur) que celles de l'état de la technique décrit plus haut.

Ceci est particulièrement intéressant lorsqu'on souhaite utiliser l'élément de sécurité sur un « fil » ou un « foil » de sécurité et non plus sur une partie imprimée du document. En effet, dans le cas des fils de sécurité, lorsqu'ils sont intégrés en « fenêtre » (« window » en anglais) dans du papier, les portions de visibilité de ces fils sont des surfaces d'environ 2 à 5 mm, de préférence de 3 à 4 mm, de largeur sur 4 à 14 mm de hauteur en général, même si la tendance est à l'augmentation maximum de ces surfaces d'exhibition.

Pour les "foils", on entend par ce terme un élément de sécurité transféré, à froid ou de préférence à chaud, à même la surface du papier, sous forme d'un « patch » ou d'un « stripe » (bandeau s'étendant sur toute la hauteur de la feuille / du billet).

Une variante plus récente existe où le « patch » ou le « stripe » s'étend par-dessus une ouverture locale pratiquée dans le support.

Deux techniques principales sont envisageables : le transfert à chaud dans lequel le film porteur est rembobiné après que la fine pellicule contenant les éléments de sécurité ait été transférée sur le support, et la lamination où le film porteur des éléments de sécurité est directement déposé sur le support.

Dans tous les cas, si les surfaces délimitées par une largeur et une longueur ne représentent pas un enjeu pour le cas d'un "foil", les épaisseurs disponibles pour confectionner l'élément de sécurité selon l'état de l'art connu dans FR-A-2942811 sont réduites et ne dépassent pas quelques dizaines de microns.

Ainsi, si l'on utilise la gravure connue par le document précité directement sur une surface de 0,15 cm² (cas du fil où la fenêtre moyenne est de 3 x 5 mm), il serait alors nécessaire de diminuer significativement le nombre de lignes gravées (plus de 5 fois moins), et ceci au dépend de la visibilité de l'effet visuel recherché.

Une autre stratégie consisterait à utiliser cette même gravure, c'est-à-dire une seule et même ligne gravée de largeur 400 µm, mais étendue sur une largeur de 4 mm. L'inconvénient de cette méthode est que l'angle formé par le flanc de la gravure devient quasiment plat, à savoir inférieur à 1° et non de l'ordre de 30°, comme c'est le cas lorsque la largeur de la ligne est de 400 µm. On perd alors l'effet de réflexion changeante de la lumière aisément décelable à l'oeil nu sur des pentes devenues quasiment plates.

Par ailleurs, les profondeurs de gravure enseignées dans ce même document varient de 0 à 200 µm et, en pratique, sont de l'ordre de 0 à 100 µm.

Ces profondeurs sont incompatibles avec un élément de sécurité sous forme de fil. En effet, le fil est inséré dans le papier au moment de sa fabrication et doit donc être suffisamment mince pour que son épaisseur n'excède pas l'épaisseur du papier qui est de 100 µm environ.

Il en résulte que l'épaisseur maximale possible pour un fil de sécurité, sans qu'il ne pose de problème notamment de durabilité du papier dans lequel il est inséré, est de l'ordre de 40 à 50 µm. Et si l'on enlève de cette épaisseur les couches fonctionnelles (vernis ou couche de protection, colle de complexage, thermoadhésifs, etc.), il reste pour un élément gravé une hauteur possible de l'ordre de quelques microns à 30 µm. Cette diminution de profondeur de gravure contribue à aplatir les angles si on devait la transposer à un fil de sécurité en l'état.

Le même raisonnement s'applique *mutatis mutandi* pour le "foil" notamment à cause des faibles épaisseurs disponibles évoquées ci-avant qui forcent aussi les angles à s'aplatir.

La technique de gravure telle que décrite dans FR-A-2942811 n'est donc pas compatible avec tous les éléments de sécurité, et notamment lorsque celui-ci se présente sous la forme d'un fil ou d'un "foil".

La présente invention vise donc notamment à fournir une structure d'élément de sécurité qui se prête parfaitement à la miniaturisation, sans impact négatif sur l'effet visuel escompté et même à améliorer ce dernier.

Elle vise aussi à proposer un procédé de fabrication d'un tel élément, dont les flancs et les fonds de gravure ainsi que les crêtes associées sont les plus lisses possibles, c'est à dire avec un minimum de défaut et d'aspérités nuisibles au déploiement des effets de réflexion lumineuse.

### RESUME DE L'INVENTION

Ainsi, la présente invention se rapporte à un élément de sécurité pour un document-valeur, qui comprend un réseau d'au moins deux lignes contiguës ou adjacentes, chaque ligne comportant odes bords longitudinaux opposés, au moins une de ces lignes étant en relief et présentant deux flancs opposés, dont au moins un est en partie incliné, qui prennent naissance chacun le long d'un desdits bords longitudinaux et opposés de ladite ligne, caractérisé par le fait que lesdits deux flancs inclinés opposés se rejoignent en une zone de jonction unique et ininterrompue, de forme sinueuse, qui s'étend selon la direction longitudinale de ladite ligne, lesdits flancs ne présentant aucune discontinuité ou interruption au moins dans ladite direction longitudinale, la projection de la zone de jonction dans le plan du réseau et la projection de la zone de jonction dans le plan orthogonal au réseau et parallèle aux lignes étant chacune décrites par une fonction continue et dérivable en tout point.

Cet élément de sécurité présente un effet visuel qui se traduit par un changement progressif et contrôlé de la réflexion lumineuse lors de l'inclinaison du support, ladite réflexion lumineuse restant inchangée même quand la taille de cet élément de sécurité est particulièrement réduite.

Selon d'autres caractéristiques avantageuses et non limitatives de cet élément de sécurité :
- ladite zone de jonction a la forme d'une sinusoïde ;
- ladite sinusoïde présente une période inchangée sur toute son étendue ;
- ladite sinusoïde présente de préférence au moins une variation de période sur son étendue ;
- ledit réseau (R) présente une structure non périodique ;
- le relief desdites au moins deux lignes présente une variation non périodique en hauteur, en largeur et/ou en longueur ;
- ladite zone de jonction est parallèle ou sensiblement parallèle au plan dans lequel sont contenus lesdits deux bords longitudinaux et opposés ;
- ladite zone de jonction est perpendiculaire ou sensiblement perpendiculaire au plan dans lequel sont contenus lesdits deux bords longitudinaux et opposés ;
- l'amplitude de ladite zone de jonction est variable ;
- l'écartement entre ladite zone de jonction et le plan dans lequel sont contenus lesdits bords longitudinaux est constant ou variable ;
- ladite zone de jonction consiste en une arête ou de préférence en un bandeau ;
- au moins l'un desdits flancs présente une pente rectiligne ou non rectiligne ;
- toutes les lignes dudit réseau présentent une largeur identique ;
- lesdites au moins deux lignes ont un profil de relief non-triangulaire ; en largeur et/ou en longueur ;
- au moins une ligne dudit réseau présente une largeur différente de celle des autres lignes ;
- au moins une ligne dudit réseau présente une zone de jonction de forme différente de celle des autres lignes ;
- lesdits flancs sont inclinés vers le haut ou vers le bas, relativement auxdits bords longitudinaux et opposés ;
- l'ensemble comprend un ensemble multicouche, ledit réseau est intégré dans cet ensemble multicouche, et cet ensemble multicouche comporte des couches additionnelles choisies dans le groupe constitué par les encres à colorants ou pigmentaires, les encres pigmentaires à changement de couleur, les cristaux liquides, les films plastiques multicouches à variation d'indice de réfraction, les filtres optiques interférentiels à couches minces, les métaux déposés sous vide ;
- l'élément de sécurité est un fil de sécurité, un patch ou un foil.

L'effet visuel obtenu comprend avantageusement au moins l'un des effets suivants :
- variation de contraste,
- réflexion,
- entrelacement d'images, - image en niveau de gris, notamment grâce à des variations d'intensité lumineuse,
- mouvement et/ou déplacement d'objets lumineux,
- images apparaissant dans un ou plusieurs plans différent(s) de celui du fil.

Les couches additionnelles précédemment citées permettent d'ajouter d'autres effets à la structure finale. Il s'agit en particulier d'un effet de changement de couleur de la structure selon son angle d'observation, cet effet est notamment obtenu au moyen d'une couche additionnelle choisie parmi les encres pigmentaires à changement de couleur, les cristaux liquides, les films plastiques multicouches à variation d'indice de réfraction et les filtres optiques interférentiels à couches minces.

Un autre aspect de l'invention est relatif à un procédé de fabrication d'un outil d'embossage d'un élément de sécurité selon l'une des caractéristiques ci-dessus.

Ce procédé est remarquable par le fait qu'il comprend au moins les étapes qui consistent à :
a) confectionner, c'est-à-dire fabriquer, une image bidimensionnelle caractéristique d'une fraction d'une ligne dudit réseau, cette image étant à niveaux multiples de gris, à chaque niveau de gris étant assignée une profondeur ou une altitude ;
b) répéter l'étape a) autant que nécessaire et assembler des fractions identiques ou différentes pour former une ligne de la forme et longueur voulue ;
c) répéter les étapes a) et b) autant que nécessaire pour réaliser des lignes à rassembler de manière contigüe ou adjacente afin de former des sous-ensembles ;
d) le cas échéant, répéter les étapes de a) à c) de manière à réaliser le motif final;
e) à partir de l'image ou du motif final issu des étapes a) à d) ci-dessus, former une image tridimensionnelle dans laquelle chaque point de cette image présente un emplacement caractéristique dudit niveau de gris ;
f) procéder à la réalisation matérielle tridimensionnelle de celle-ci, de façon à obtenir une empreinte caractéristique de l'image issue de l'étape e).

Selon un mode particulier de réalisation, ladite origination est réalisée en mettant en oeuvre l'une ou l'autre des techniques suivantes : photolithogravure, notamment à niveaux de gris, lithographie laser, lithographie électronique ou lithographie à faisceau d'électrons.

Enfin, l'invention se rapporte à un document-valeur, notamment billet de banque, qui comporte au moins un élément de sécurité selon l'une des caractéristiques précédentes.

### BREVE DESCRIPTION DES DESSINS

D'autres caractéristiques et avantages de l'invention apparaîtront à la lecture de la description suivante de modes de réalisation préférés de l'invention. Cette description est faite en référence aux dessins annexés dans lesquels :
- la figure 1 est une vue schématique, tridimensionnelle et partielle d'un réseau de lignes d'un élément de sécurité selon l'invention ;
- la figure 2 est une vue d'une partie d'une ligne de la figure 1, représentée en "niveaux de gris" ;
- la figure 3 est une vue d'une ligne plus étendue du réseau de la figure 1, représentée en "niveaux de gris" ;
- la figure 4 est une vue de dessus d'une partie d'une ligne d'un réseau selon une variante de l'invention, tandis que les figures 4A et 4B sont des vues en coupe de la figure 4, selon les plans IVA et IVB ;
- les figures 5 à 10 sont des vues schématiques destinées à illustrer certaines formes spécifiques de flancs inclinés d'éléments selon l'invention ;
- la figure 11 est une vue de dessus d'une partie d'une ligne d'un réseau selon une variante de l'invention, tandis que les figures 11A et 11B sont des vues en coupe de la figure 11, respectivement selon les plans XIA et XIB ;
- la figure 12 est une vue de dessus d'une partie d'une ligne d'un réseau selon une variante de l'invention, tandis que les figures 12A et 12B sont des vues en coupe de la figure 12, respectivement selon les plans XIIA et XIIB ;
- la figure 13 est une vue de dessus d'une partie d'une ligne d'un réseau selon une variante de l'invention, tandis que les figures 13A et 13B sont des vues en coupe de la figure 13, respectivement selon les plans XIIIA et XIIIB ;
- la figure 14 est une vue de dessus d'une partie d'une ligne d'un réseau selon une variante de l'invention, tandis que les figures 14A, 14B et 14C sont des vues en coupe de la figure 14, respectivement selon les plans XIVA, XIVB et XIVC ;
- la figure 15 est une vue de dessus d'une partie d'une ligne d'un réseau selon une variante de l'invention, tandis que les figures 15A, 15B et 15C sont des vues en coupe de la figure 15, respectivement selon les plans XVA, XVB et XVC ;
- la figure 16 est une vue de dessus d'une partie d'une ligne d'un réseau selon une variante de l'invention, tandis que les figures 16A, 16B et 16C sont des vues en coupe de la figure 16, respectivement selon les plans XVIA, XVIB et XVIC ;
- la figure 17 est une vue de dessus d'une partie d'une ligne d'un réseau selon une variante de l'invention, tandis que les figures 17A, 17B et 17C sont des vues en coupe de la figure 17, respectivement selon les plans XVIIA, XVIIB et XVIIC ;
- la figure 18 est une vue de dessus d'une partie d'une ligne d'un réseau selon une variante de l'invention, tandis que les figures 18A et 18B sont des vues en coupe de la figure 18, respectivement selon les plans XVIIIA et XVIIIB ;
- la figure 19 est une vue de dessus d'une partie d'une ligne d'un réseau selon une variante de l'invention, tandis que les figures 19A à19E sont des vues en coupe de la figure 19, respectivement selon les plans XIXA à XIXE ;
- la figure 20 est une vue de dessus d'une partie d'une ligne d'un réseau selon une variante de l'invention, tandis que les figures 20A, 20B et 20C sont des vues en coupe de la figure 20, respectivement selon les plans XXA, XXB et XXC ;
- la figure 21 est une vue de dessus d'une partie d'une ligne d'un réseau selon une variante de l'invention, tandis que les figures 21A et 21B sont des vues en coupe de la figure 21, respectivement selon les plans XXIA et XXIB ;
- la figure 22 est une vue de dessus d'une partie d'une ligne d'un réseau selon une variante de l'invention, tandis que les figures 22A et 22B sont des vues en coupe de la figure 22, respectivement selon les plans XXIIA et XXIIB ;
- la figure 23 est une vue de dessus d'une partie d'une ligne d'un réseau selon une variante de l'invention, tandis que les figures 23A et 23B sont des vues en coupe de la figure 23, respectivement selon les plans XXIIIA et XXIIIB ;
- la figure 24 est une vue de dessus d'une partie d'une ligne d'un réseau selon une variante de l'invention, tandis que les figures 24A et 24B sont des vues en coupe de la figure 24, respectivement selon les plans XXIVA et XXIVB ;
- la figure 25 est une vue de dessus d'une partie d'une ligne d'un réseau selon une variante de l'invention, tandis que les figures 25A et 25B sont des vues en coupe de la figure 25, respectivement selon les plans XXVA et XXVB ;
- la figure 26 est une vue de dessus d'une partie d'une ligne d'un réseau selon une variante de l'invention, tandis que les figures 26A, 26B et 26C sont des vues en coupe de la figure 26, respectivement selon les plans XXVIA, XXVIB et XXVIC ;
- la figure 27 est une vue de dessus d'une partie d'une ligne d'un réseau selon une variante de l'invention, tandis que les figures 27A, 27B et 27C sont des vues en coupe de la figure 27, respectivement selon les plans XXVIIA, XXVIIB et XXVIIC ;
- la figure 28 est une vue de dessus d'une partie d'une ligne d'un réseau selon une variante de l'invention, tandis que les figures 28A, 28B et 28C sont des vues en coupe de la figure 28, respectivement selon les plans XXVIIIA, XXVIIIB et XXVIIIC ;
- la figure 29 est une vue de dessus d'une partie d'une ligne d'un réseau selon une variante de l'invention, tandis que les figures 29A à29E sont des vues en coupe de la figure 29, respectivement selon les plans XXIXA à XXIXE ;
- la figure 30 est une vue de dessus d'une partie d'une ligne d'un réseau selon une variante de l'invention, tandis que les figures 30A, 30B et 30C sont des vues en coupe de la figure 30, respectivement selon les plans XXXA, XXXB et XXXC ;
- la figure 31 est une vue de dessus d'une partie d'une ligne d'un réseau selon une variante de l'invention, tandis que les figures 31A, 31B et 31C sont des vues en coupe de la figure 31, respectivement selon les plans XXXIA, XXXIB et XXXIC ;
- les figures 32 à 36 sont des vues schématiques en coupe d'éléments de sécurité multicouches conformes à l'invention ;
- la figure 37 est une vue de dessus d'un billet de banque qui intègre deux éléments de sécurité conformes à l'invention ;
- enfin, les figures 38 à 40 sont des illustrations de trois formes de réalisation d'éléments selon l'invention.

### DESCRIPTION DETAILLEE DE L'INVENTION

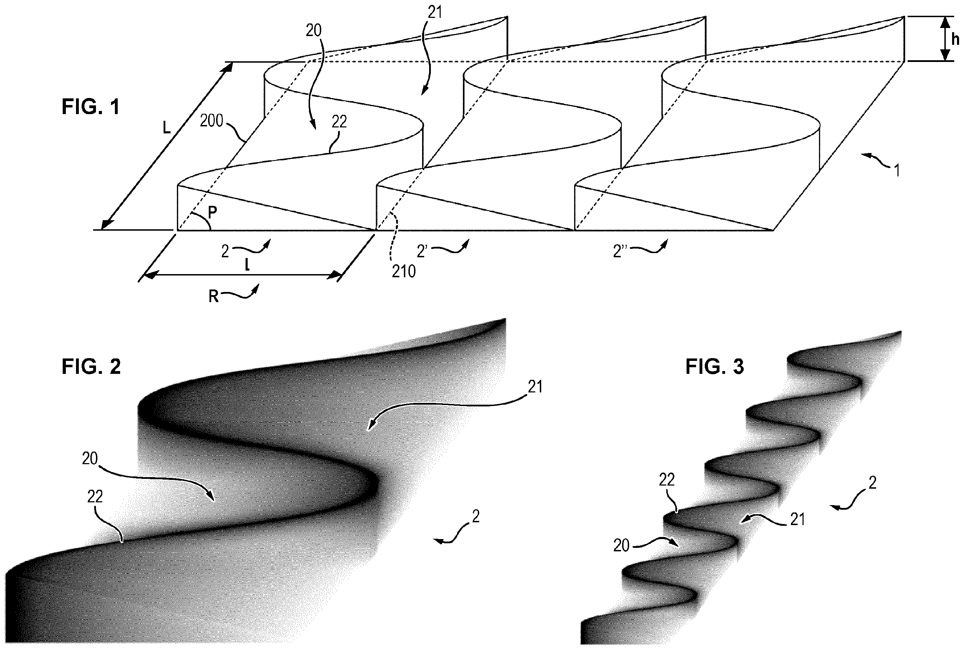

A la figure 1 est représenté un élément de sécurité conforme à l'invention.

Cet élément n'est représenté que très partiellement de manière à rendre la consultation de la figure plus aisée.

Ainsi, cet élément 1 est formé sur un matériau plastique tel que du polyéthylènetéréphtalate (PET) ou du polypropylène bi-orienté (BOPP), sans que ce soit limitatif.

Dans l'exemple représenté ici, l'élément 1 comporte un réseau R formé de trois lignes contiguës 2, 2' et 2". Bien entendu, il est possible de prévoir un élément présentant un nombre bien supérieur de lignes. La longueur L des lignes est, dans ce cas particulier, identique et peut être de l'ordre de quelques millimètres à quelques centimètres. Seule une portion est représentée ici. De même, la largeur l de chacune des lignes est identique dans ce cas précis et est comprise entre une limite inférieure qui va faire diffracter la lumière incidente (au voisinage de 1 µm, ce que l'on souhaite éviter) et 100 µm pour se cantonner à un phénomène de réflexion pure, de préférence la limite haute est inférieure à 50 µm et encore plus préférentiellement inférieur à 40 µm.

La hauteur h est, quant à elle, par exemple comprise entre 1 et 50 µm et préférentiellement de l'ordre de 10 µm ou moins.

Bien entendu, dans une forme de réalisation non représentée, on pourrait prévoir des lignes de largeurs l différentes.

Dans l'exemple représenté, les lignes 2 à 2" sont rectilignes. Toutefois, dans une variante non illustrée sur les figures, le réseau R peut comprendre des lignes incurvées, circulaires et plus généralement de forme quelconque, voire une seule ligne, par exemple en forme de spirale, de sorte que le réseau R est formé par la pluralité des tours de la spirale.

Ainsi que cela est clairement visible sur la figure, chacune des trois lignes du réseau R est en relief. Toutefois, on peut envisager qu'une partie d'entre elles soit en relief tandis que les lignes restantes sont strictement planes. Ainsi, par exemple, on pourrait envisager une alternance de lignes en relief et de lignes planes. La présence de lignes non réfléchissantes, notamment transparentes, pourrait être mise à contribution pour faire apparaître des éléments d'information discernables visuellement.

Dans l'exemple représenté et conformément à l'invention, chacune des lignes en relief 2 à 2" présente deux flancs inclinés opposés 20 et 21 qui prennent naissance chacun le long d'un des bords longitudinaux et opposés 200 et 210 de la ligne. Ici, les flancs sont inclinés vers le haut, ce qui signifie qu'ils s'étendent en direction l'un de l'autre vers une altitude plus élevée que celle des bords longitudinaux 200 et 210.

Par l'expression "flancs inclinés", on entend dans l'ensemble de la présente demande qu'au moins une partie d'au moins un de ces deux flancs est inclinée. En d'autres termes, cela n'exclut pas que les flancs soient localement verticaux ou horizontaux.

Toujours selon l'invention, les deux flancs 20 et 21 se rejoignent en une zone de jonction unique et ininterrompue 22 de forme sinueuse qui s'étend selon la direction longitudinale de la ligne, ces flancs 20 et 21 ne présentant aucune discontinuité ou interruption, au moins en direction longitudinale.

Par l'expression "zone de jonction de forme sinueuse", on entend que cette zone de jonction sinueuse ne comporte aucune zone anguleuse. Autrement dit, la projection de la zone de jonction dans le plan du réseau et la projection de la zone de jonction dans le plan orthogonal au réseau et parallèle aux lignes, sont chacune décrites par une fonction continue et dérivable en tout point. De plus, cette zone de jonction est ininterrompue, de sorte qu'elle s'étend de manière unique d'une extrémité à l'autre de la ligne en question.

Dans le mode de réalisation particulier de la figure 1, la zone de jonction 22 a la forme d'une sinusoïde et est limitée à une ligne formant une arête. Dans d'autres modes de réalisation dont certains seront décrits plus loin, cette zone de jonction pourrait consister non pas en une arête mais en un bandeau de largeur constante ou variable.

Par ailleurs, cette zone de jonction pourrait avoir une forme différente de celle d'une sinusoïde tout en demeurant sinueuse.

Ici, la sinusoïde présente une période inchangée sur toute son étendue. De plus, les lignes adjacentes sont en phase (évolution parallèle des zones de jonction), mais il pourrait bien entendu en être autrement. Par ailleurs, son amplitude est égale à la largeur l de la ligne. Là encore, il pourrait en être autrement. En particulier la sinusoïde peut présenter une période variable, les lignes adjacentes peuvent présenter un décalage de phase, et/ou l'amplitude de la sinusoïde est différente de la largeur des lignes.

Enfin, on remarque que le plan dans lequel s'étend cette sinusoïde est parallèle au plan P qui contient les deux bords longitudinaux 200 et 210. A nouveau, il pourrait en être autrement, ainsi qu'on le montrera en référence à d'autres figures.

Par ailleurs, on note que les flancs 20 et 21 de chaque ligne présente une pente rectiligne d'un des bords longitudinaux en direction de la zone de jonction 22.

A la figure 2 est représentée une seule des lignes du réseau R de la figure 1. Par ailleurs, cette ligne est représentée en "niveaux de gris". Cela signifie qu'à chaque point de cette ligne, une nuance comprise entre le blanc et le noir a été affectée en tenant compte de la règle selon laquelle plus le point de cette ligne est distant du plan P précité, plus sa couleur est sombre. Ainsi, la zone 22 est représentée en couleur noire. Cette représentation en niveaux de gris est mise à profit pour la fabrication du présent élément de sécurité, ainsi qu'on le montrera plus loin dans la description.

La figure 3 est une vue équivalente à la figure 2, si ce n'est que l'on a représenté une ligne 2 présentant une étendue longitudinale supérieure.

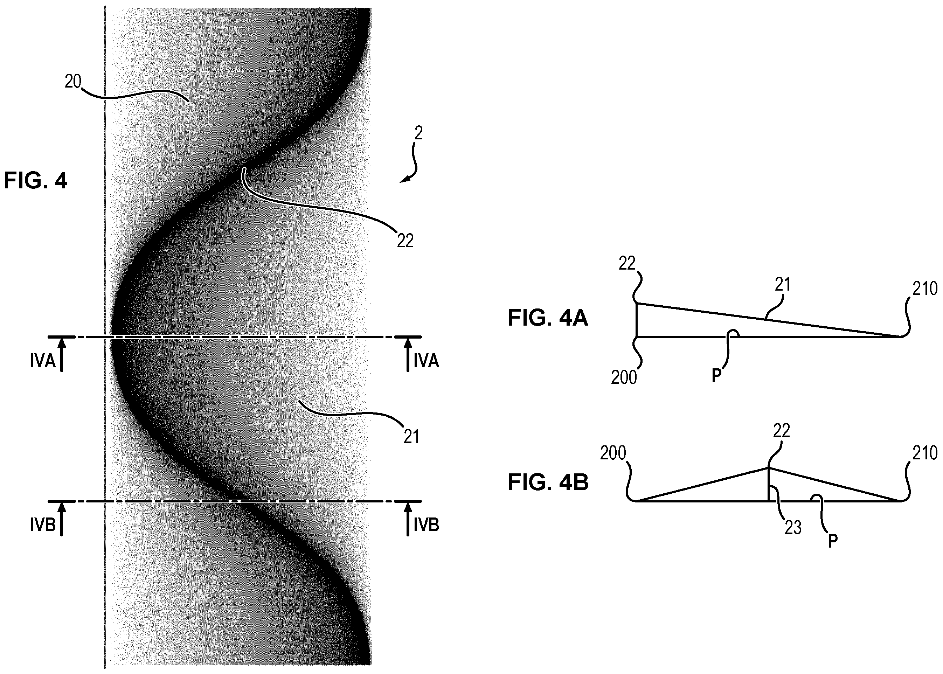

La figure 4 représente une vue de dessus de la ligne des figures 2 et 3, et limitée à la représentation d'une seule période de la sinusoïde. On y distingue encore plus facilement les différentes variations de gris, selon l'endroit considéré. La coupe de la figure 4A montre explicitement que, dans cette région, la zone de jonction 22 se situe à la verticale du bord longitudinal 200. Cette figure montre également que le flanc 21 présente une pente rectiligne.

La figure 4B illustre, quant à elle, le fait que, selon le plan de coupe illustré ici, la zone de jonction 22 se situe à mi-distance des deux bords longitudinaux 200 et 210. On a référencé 23 la droite qui se situe à la verticale de la zone 22, sans que pour autant cette droite existe dans la réalité.

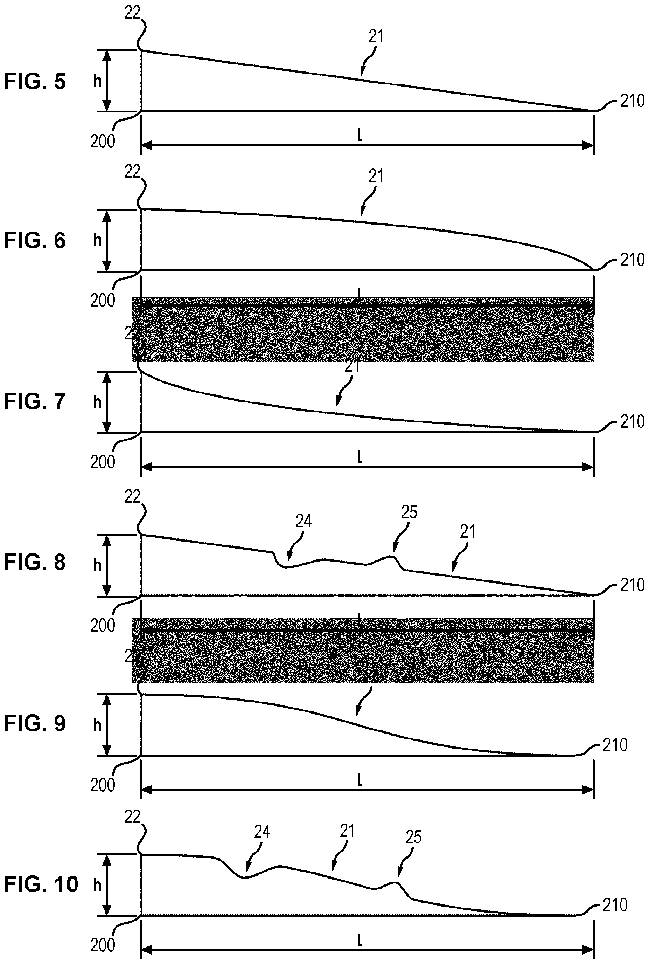

La figure 5 est similaire à la figure 4A et met l'accent sur le fait que le flanc 21 présente une pente rectiligne. Sur cette figure et les suivantes, la référence h désigne la hauteur maximale de la sinusoïde 22.

Aux figures 6 à 10 sont représentées des formes générales (coupes) différentes du flanc 21, sans que ceci ne constitue un panel exhaustif. On précise toutefois que ces descriptions sont valables également pour le second flanc 20 qui n'a pas été représenté ici. Bien entendu les flancs 20 et 21 peuvent avoir des formes générales différentes.

Ainsi, à la figure 6, le flanc 21 présente une pente qui est légèrement convexe dont la convexité est dirigée à l'opposé de la base du flanc.

A l'inverse, à la figure 7, on a affaire à un flanc 21 dont la pente présente une légère concavité dirigée vers la base du flanc.

Aux figures 8 à 10 sont représentées des formes de réalisation qui s'inspirent de celles qui viennent d'être décrites.

Ainsi, plus précisément, la figure 8 représente la situation dans laquelle le flanc 21 s'inscrit dans une droite mais présente localement une légère concavité (cuvette) référencée 24 ainsi qu'une légère convexité (bosse) référencée 25.

La figure 9 illustre un flanc 21 globalement convexe, mais qui présente un point d'inflexion c'est-à-dire un changement de courbure, en direction du bord 210.

Quant à la figure 10, on a ici affaire à un flanc 21 de forme globalement similaire à celui de la figure 9, mais avec, localement, une légère concavité (cuvette) référencée 24, ainsi qu'une légère convexité (bosse) 25.

Ces bosses ou "excroissances" et cuvettes ou "creux" génèrent, au sein de l'élément, des aspects réfléchissants spécifiques de la lumière, afin de faire apparaître des informations se détachant du fond selon l'angle d'observation.

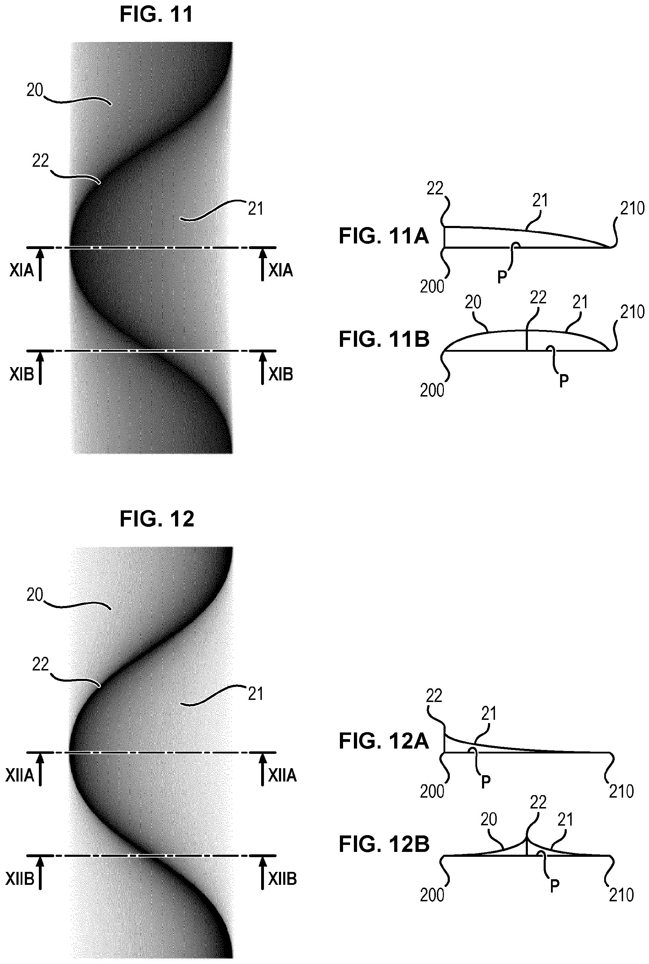

La figure 11 est une vue analogue à la figure 4 d'une variante de réalisation. Ici encore, on a affaire à une zone de jonction 22 qui a la forme d'une sinusoïde dont l'amplitude est égale à la largeur l de la ligne. Toutefois, on note à l'observation des figures 11A et 11B que les deux flancs 20 et 21 présentent une pente de forme convexe.

En référence à la figure 12, on a affaire à une variante de la figure 11 dans laquelle, comme montré aux figures 12A et 12B, les flancs 20 et 21 ont une pente de forme concave.

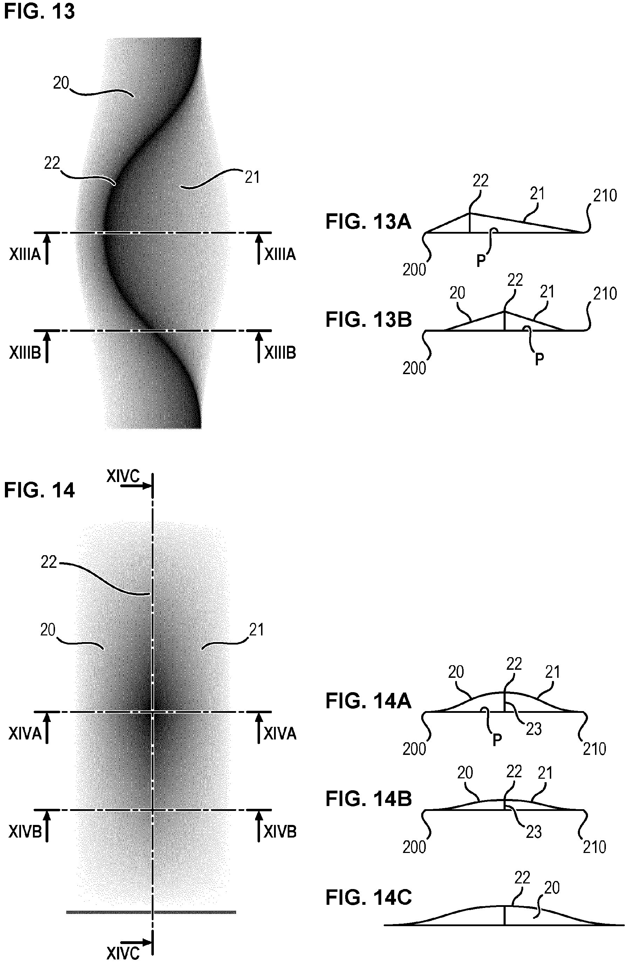

Dans le mode de réalisation de la figure 13, on a toujours affaire à une zone de jonction qui a la forme d'une sinusoïde. Toutefois ici, son amplitude est inférieure à la largeur l de la ligne. De plus, ses flancs 20 et 21 présentent une pente comprenant une ou deux portions rectilignes, comme le montre la figure 13B. En effet, dans certaines zones de cette ligne, chaque flanc 20 et 21 présente une partie de rattachement aux bords 200 et 210 qui est confondue avec le plan P précité.

Les modes de réalisation qui viennent d'être décrits avaient pour point commun que la zone de jonction 22 est parallèle au plan P dans lequel sont contenus les bords longitudinaux 200 et 210.

Tel n'est pas le cas de la figure 14 notamment. En effet, dans ce mode de réalisation, si la zone de jonction 22 s'inscrit toujours dans une sinusoïde, celle-ci se déploie dans un plan perpendiculaire ou sensiblement perpendiculaire au plan P précité.

La consultation des figures 14A à 14C permet de constater que les flancs 20 et 21 rejoignent les bords opposés 200 et 210, ces flancs présentant une pente de forme courbe avec un point d'inflexion.

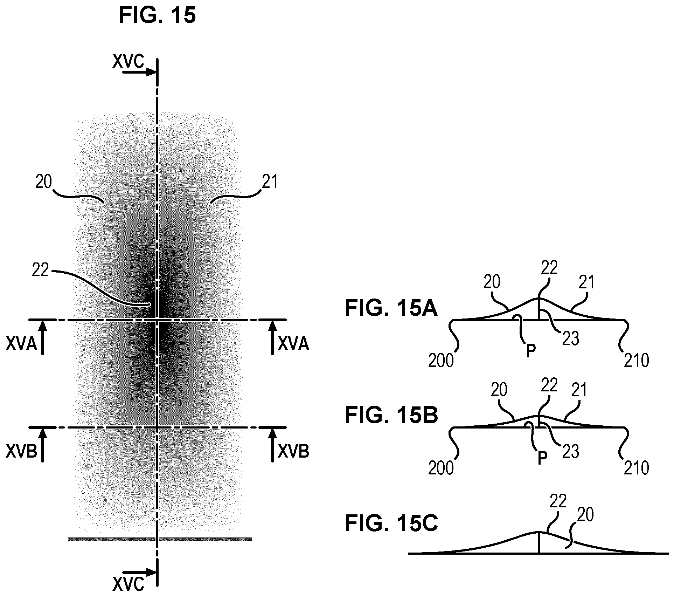

Dans le mode de réalisation de la figure 15, on a sensiblement affaire aux mêmes caractéristiques que dans la variante de la figure 14. Toutefois, l'amplitude de la sinusoïde est légèrement inférieure et les flancs 20 et 21 présentent une forme légèrement concave.

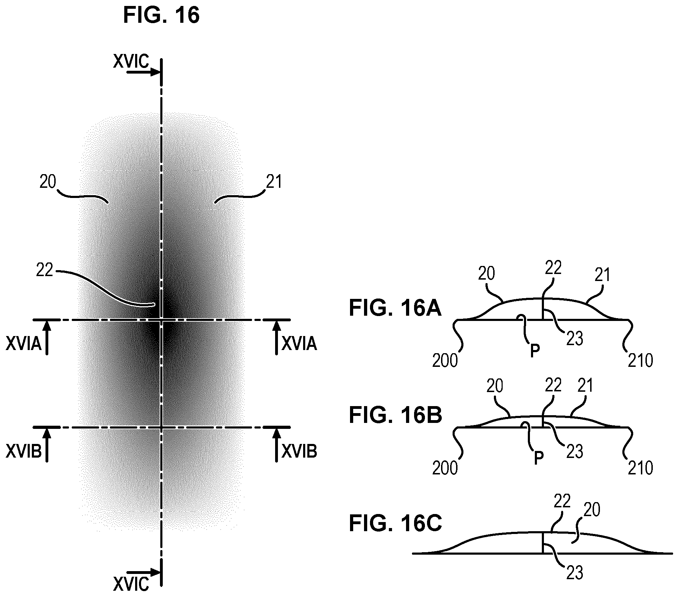

De même, dans la variante des figures 16, 16A, 16B et 16C, on a sensiblement affaire aux modes de réalisation des figures 14 et suivantes si ce n'est que l'altitude maximale de la zone de jonction 22 reste stable sur une certaine étendue, de sorte qu'elle lui confère la forme d'un plateau.

Dans les modes de réalisation qui viennent d'être décrits, la zone de jonction 22 était toujours en surplomb par rapport aux endroits où prennent naissance les flancs 20 et 21.

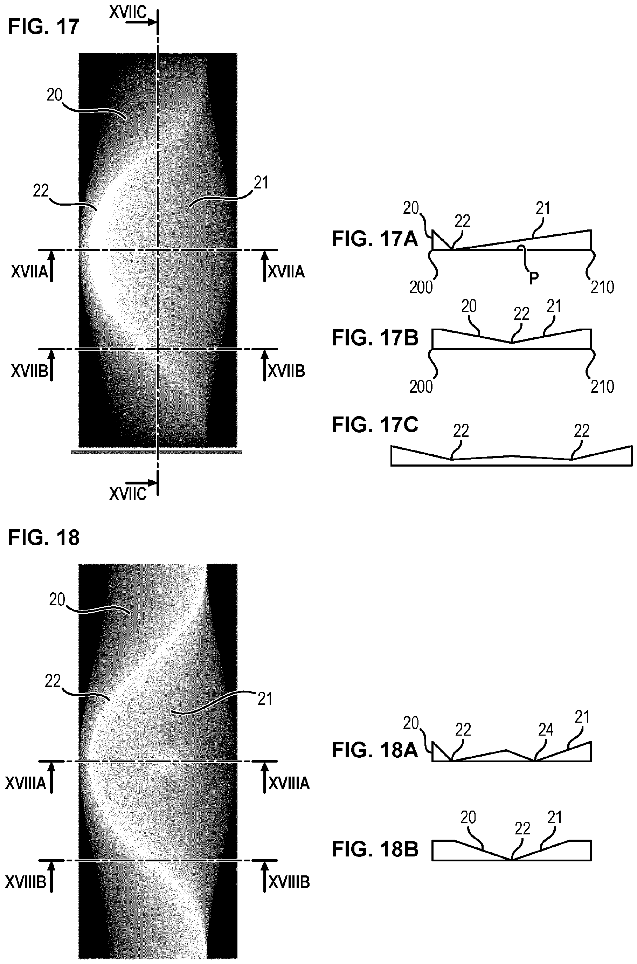

Telle n'est pas la situation illustrée à la figure 17 dans laquelle la zone de jonction 22 se situe toujours à un niveau inférieur à celui des flancs 20 et 21. Cette zone a la forme d'une sinusoïde dont l'amplitude est inférieure à la largeur de la ligne. De plus, son "altitude", c'est à dire son éloignement vis-à-vis du plan P n'est pas constant, comme le montrent les figures 17A et 17B.

A la figure 18 est représentée une situation relativement analogue à celle de la figure 17. A nouveau, l'amplitude de la zone de jonction 22 est inférieure à la largeur l de la ligne, et le flanc 21 présente ici, localement, une différence de niveau localisée en forme de cuvette et référencée 24.

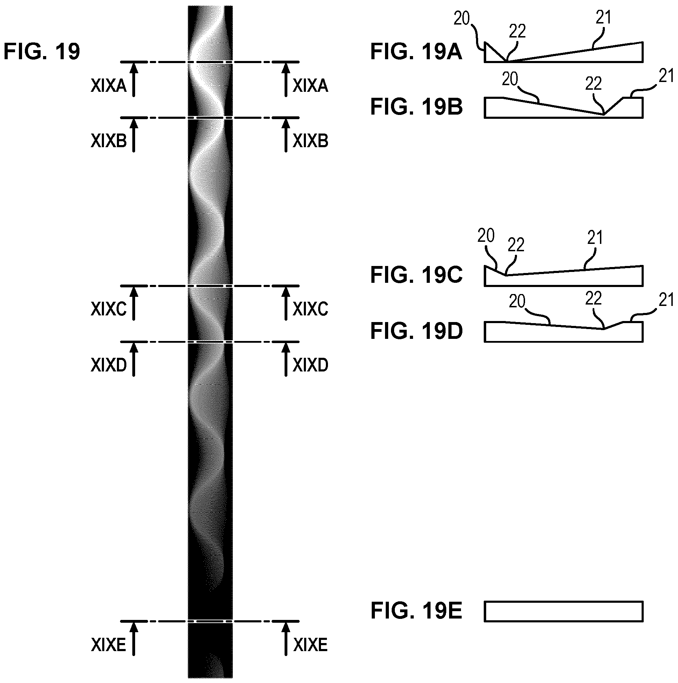

A la figure 19 est représentée schématiquement la situation dans laquelle la zone de jonction a toujours la forme d'une sinusoïde. Toutefois, celle-ci ne se déploie pas dans un plan strictement parallèle au plan P dans lequel sont contenus les bords longitudinaux 200 et 210. Plus précisément, au fur et à mesure que l'on avance dans l'étendue longitudinale de cette ligne, ladite zone de jonction se rapproche du plan P précité.

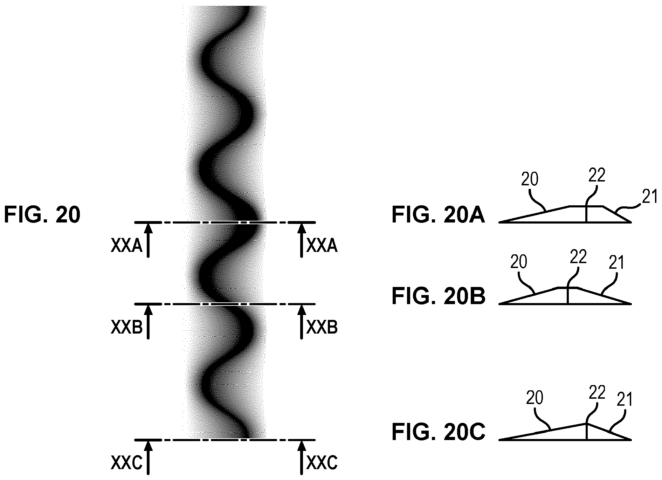

Dans le mode de réalisation de la figure 20, on a affaire à une zone de jonction qui s'inscrit encore dans une sinusoïde. Toutefois, cette zone de jonction a la forme d'un bandeau, c'est-à-dire qu'elle se matérialise non pas par une arête mais présente une étendue transversale non négligeable, comme le montre notamment la figure 20A.

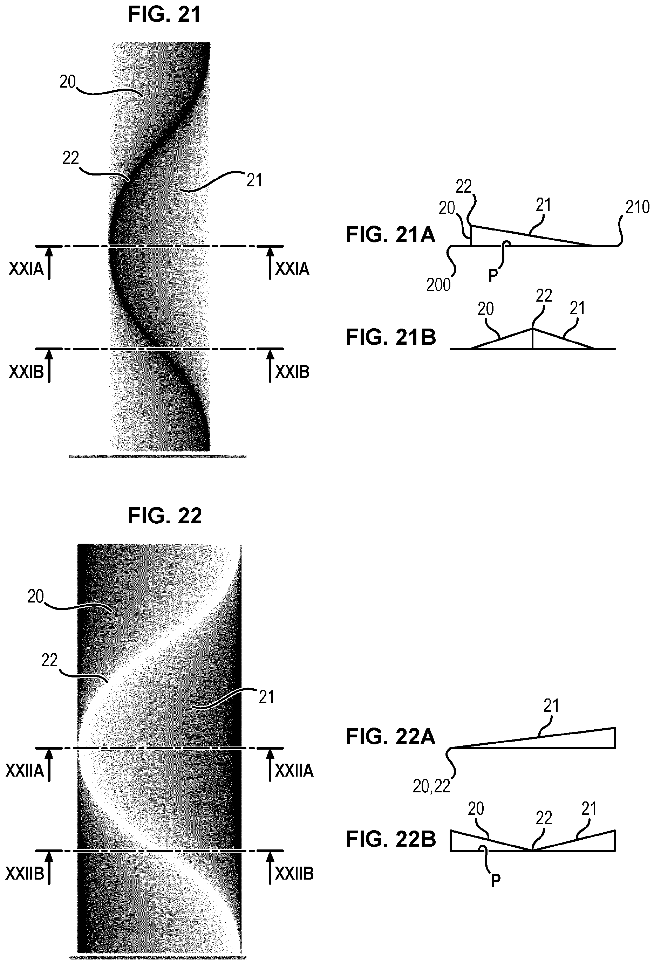

La figure 21 illustre une situation comparable à celle de la figure 4. Toutefois, on notera que la zone de jonction 22 sinusoïdale présente une amplitude qui est toujours inférieure à la largeur de la ligne et est centrée sur cette ligne de sorte que les flancs 20 et 21 sont chacun bordés en direction des bords longitudinaux 200 et 210 par des zones strictement planes et confondues avec le plan P précité.

En référence à la figure 22, on a affaire à une zone de jonction 22 qui est toujours en creux par rapport aux flancs 20 et 21, comme le montrent particulièrement les figures 22A et 22B. En revanche, l'amplitude de cette zone de jonction est toujours égale à la largeur de la ligne.

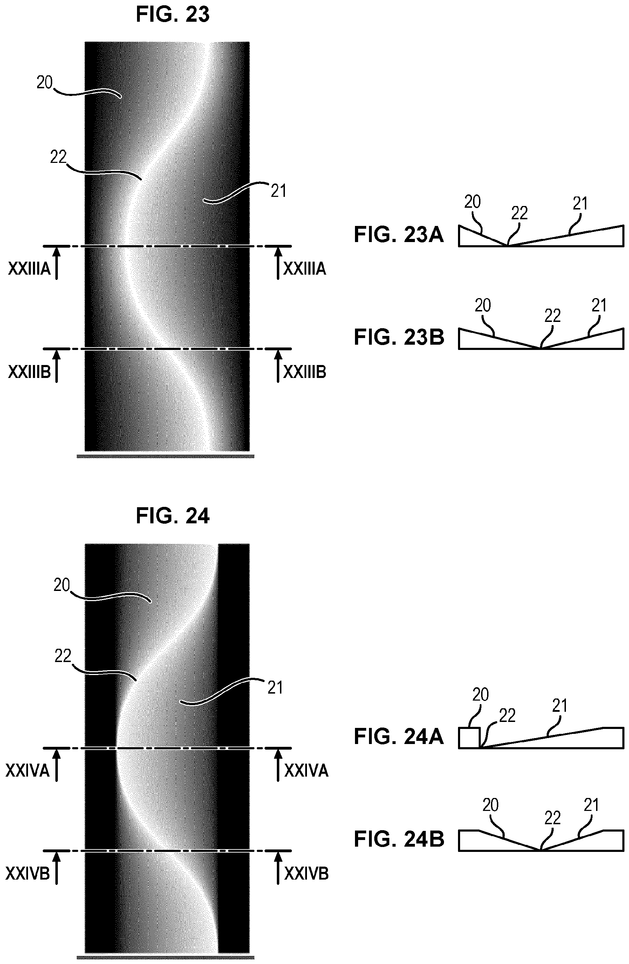

Tel n'est pas le cas de la figure 23 où la zone de jonction sinusoïdale 22 présente une amplitude inférieure à la largeur de la ligne. De plus, à nouveau ici, cette zone de jonction est en creux par rapport aux flancs 20 et 21.

A la figure 24, on a affaire à une zone de jonction sinusoïdale 22 dont l'amplitude est inférieure à la largeur de la ligne. Par ailleurs et comme le montrent les deux vues en coupe des figures 24A et 24B, les flancs 20 et 21 présentent localement soit une orientation horizontale (en forme de plateau), soit la combinaison d'une orientation horizontale et oblique (inclinée).

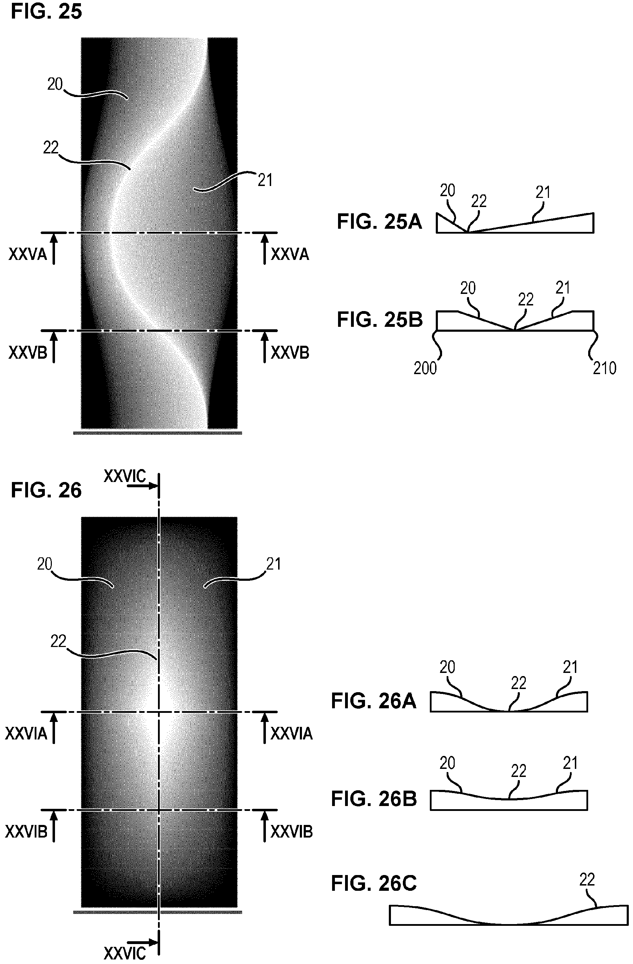

A la figure 25 est représentée une forme de zone de jonction 22 sinusoïdale relativement similaire à celle de la figure 23. Toutefois, comme on peut le constater à la lecture de la figure 25B, dans certaines régions de l'étendue longitudinale de la ligne, les flancs 20 et 21 comprennent chacun deux portions rectilignes d'orientation différente.

La figure 26 représente un mode de réalisation qui est exactement l'inverse de celui de la figure 14. Cela signifie que la zone de jonction sinusoïdale 22 se déploie dans un plan parallèle aux plans qui contiennent les bords 200 et 210. Toutefois, les flancs 20 et 21 sont toujours surélevés par rapport à ladite zone de jonction.

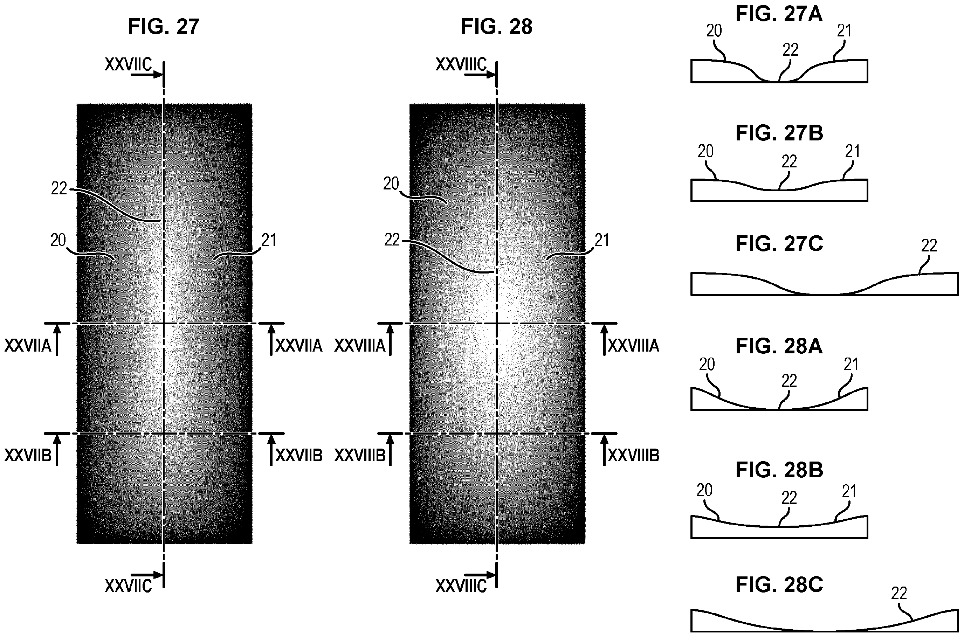

La figure 27 représente une situation relativement analogue à celle de la figure 26, si ce n'est que la période et l'amplitude de la sinusoïde qui constitue la zone de jonction 22 sont différentes.

A la figure 28 on a représenté un mode de réalisation très similaire à celui de la figure 27. Il s'en distingue par le fait que les flancs 20 et 21, au lieu d'être convexes, sont concaves.

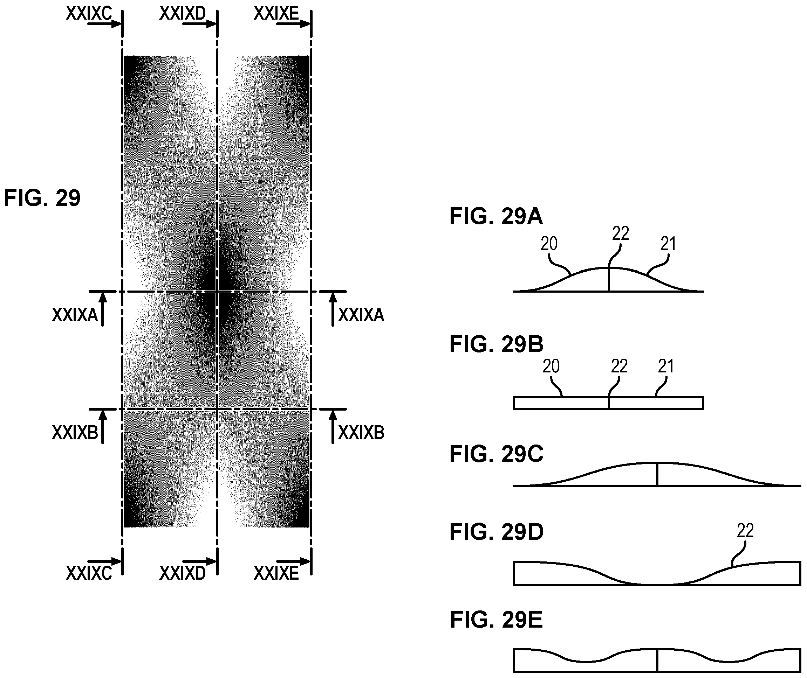

La figure 29 est composée d'un module unitaire dupliqué en miroir de manière horizontale et verticale. Ce module de base a quatre coins. Une altitude a été définie à chaque coin de ce module de base. Les coins opposés sont à la même altitude. Deux sont à l'altitude maximale et deux sont à l'altitude minimale. Ce module ressemble donc à un "X" dont les deux pointes opposées montent et les deux autres descendent.

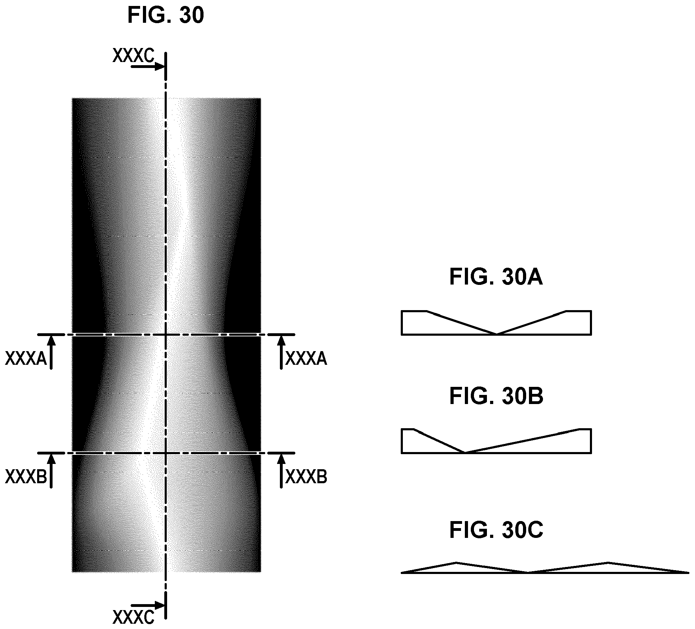

La figure 30 illustre le cas où la sinusoïde n'est pas centrée dans le bloc. La zone de jonction 22 présente une forme continue mais non régulière. Les flancs 20 et 21 ont une amplitude variable suivant leur position sur le bloc. Ainsi, sur la vue en coupe représentée à la figure 30A, les flancs 20 et 21 sont constitués de plateaux et croissances/décroissances parfaitement symétriques alors que sur la vue en coupe représentée à la figure 30B, les plateaux et pentes des flancs 20 et 21 ne sont pas symétriques, générant ainsi un effet de vallée plus ou moins étroite.

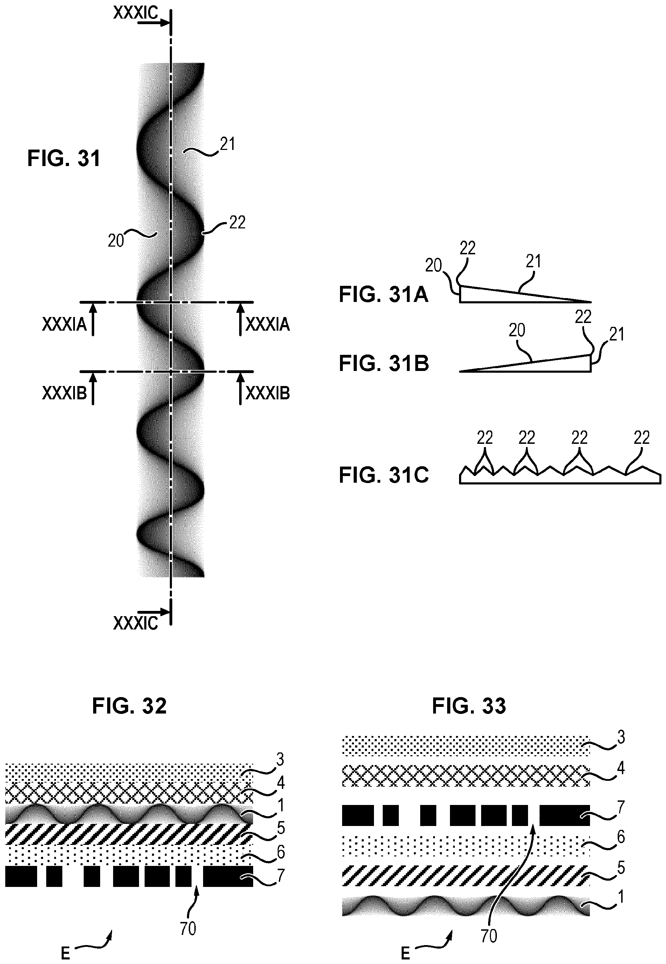

Enfin, dans le mode de réalisation de la figure 31, on a toujours affaire à une zone de jonction de forme sinusoïdale. Elle s'étend dans un plan parallèle au plan P précité mais on remarque, notamment en comparant les figures 31 et 31C, que la période de cette sinusoïde varie selon l'étendue longitudinale de la ligne.

Après avoir décrit ces différentes formes de réalisation de l'élément de sécurité 1 selon l'invention, procédons maintenant à la description d'au moins un exemple de fabrication d'une empreinte d'un tel élément de sécurité.

Pour cette description, on se référera plus précisément aux figures 1, 2, 3 et 4.

Ainsi, dans une première étape, ce procédé consiste à confectionner, c'est-à-dire à fabriquer, une image bidimensionnelle qui est caractéristique d'une fraction d'une ligne du réseau R à constituer, cette image étant à "niveaux multiples de gris", à chaque niveau de gris étant assignée une profondeur ou une altitude.

Préférentiellement, cette première étape fait usage d'outils graphiques vectoriels ou matriciels, tels que des logiciels disponibles actuellement. On obtient ainsi une image bidimensionnelle où le segment unitaire est ici la période caractéristique de la sinusoïde. On va répliquer ce segment unitaire de manière semblable à ce qui est visible aux figures 3 et 4 précitées, ou l'accoler à un nouveau segment pour que l'effet obtenu soit visuellement continu et sans point de raccordement visible. Au moins deux segments unitaires identiques ou différents forment un premier bloc ou une première fraction à répliquer autant de fois que désiré.

Dans une deuxième étape, on répète l'étape qui vient d'être décrite autant de fois que nécessaire et on assemble des segments unitaires différents et/ou des blocs ou fractions identiques ou différents pour former une ligne de la forme et de la longueur voulues. Bien entendu, on veille, afin de conserver la continuité du design, à ce que les points de départ et d'arrivée de la zone de jonction de chacun des blocs se connectent sans point de raccordement visible.

Cela vaut, bien entendu, même si la zone de jonction s'étend dans un plan perpendiculaire au plan P précité.

Dans une étape ultérieure, on répète les étapes précédentes autant de fois que nécessaire pour réaliser plusieurs lignes à assembler de manière contiguë ou adjacente afin de constituer des sous-ensembles aptes à générer des effets optiques discernables à l'oeil nu. Les lignes du réseau R d'un sous-ensemble pourront être identiques ou différentes. Enfin, on répète à nouveau le tout de manière à réaliser, si c'est l'objectif que l'on s'est fixé, le motif final avec ces sous-ensembles. A noter que l'on entend ici par sous-ensemble une structure tridimensionnelle dont les effets optiques se suffisent à eux-mêmes en ce qu'ils sont remarquables et que l'assemblage de sous-ensembles identiques ou différents peut se faire avec une discontinuité dans les raccordements (non continuité des lignes, changement brutal d'inflexion voire déconnexion totale mais suffisamment petite pour être indiscernable à l'oeil nu). Selon une variante préférée ledit assemblage de sous-ensembles identiques ou différents se fait avec une continuité dans les raccordements.

Dans une étape ultérieure, et à partir de ce qui vient d'être décrit, on réalise, toujours avec des outils graphiques vectoriels, une image tridimensionnelle dans laquelle chaque point de cette image présente un emplacement caractéristique du niveau de gris. Cette image est ensuite encodée dans le langage propre de l'outil générant les éléments de gravures réels afin d'y être enregistrée sous la forme d'une empreinte dans un support gravable.

A titre d'exemple et sans que ce soit limitatif, chaque ligne obtenue présente la configuration de la figure 3.

Une étape suivante de ce procédé consiste à mettre en oeuvre l'origination d'une résine photosensible par gravure tridimensionnelle de celle-ci, en vue d'obtenir une gravure caractéristique de l'image issue de l'étape précédente.

Cette origination peut être mise en oeuvre notamment par les techniques suivantes :
a) la photolithogravure ou lithogravure optique par projection :
   Il s'agit ici d'exposer une résine photosensible à des photons à travers un masque. Dans les zones exposées, les photons modifient la solubilité de la résine. Si la résine est positive, la zone exposée est retirée lors du développement alors que, si elle est négative, la zone exposée est conservée lors de ce développement ;
b) la photolithogravure à niveaux de gris :
   Dans ce cas particulier, le masque est à niveaux de gris, donc les densités de pixels opaques sur un fond transparent, les parties plus ou moins exposées permettant de gérer des hauteurs de marches différentes ;
c) la lithographie laser
   Cette technique est intéressante puisque l'on ne fait pas usage de masque. Des lasers, tels que les lasers UV, nanoseconde pulsé, excimère ("excimer"), NdYAG, picoseconde ou femtoseconde, sont utilisés en utilisation directe sur la résine. La résolution est de l'ordre de 0.8 µm.
d) la lithographie électronique ou lithographie à faisceau d'électrons ("e-beam") :
   Il s'agit d'une technique sans masque dans laquelle les motifs sont créés par balayage direct d'un faisceau d'électrons (10 à 100 électronvolts) dans le film de résine. La résolution est égale au diamètre du faisceau d'électrons, ce qui représente quelques nanomètres. La profondeur de gravure est donnée par la pénétration des électrons, laquelle est de 100 nm.

Le point commun de ces technologies est de permettre d'obtenir des gravures quasiment lisses et planes. Autrement dit, étant donné le pas très petit de l'outil (de quelques nanomètres à 0.8 µm), le fond de gravure mais également le flanc de la gravure peuvent être quasiment dépourvus d'aspérités, en tout cas en comparaison de l'état de la technique précédemment cité.

Toutefois, si des irrégularités de surface étaient toujours présentes nuisant à la production et à la lisibilité des effets optiques recherchés, on pourrait envisager un micropolissage. On obtient alors dans chaque ligne un miroir unique qui s'étend selon une direction de gravure et que l'on courbe sous forme de flanc dont les angles varient de manière continue.

Les étapes de fabrication ultérieures des éléments d'embossage (tels que des plaques) sont relativement classiques et nécessitent la transformation (électrodéposition, recombinaison, chromage, etc.) de l'élément unitaire créé pendant l'étape d'origination jusqu'à l'outil multipose qui servira à l'embossage thermoplastique ou à un embossage assisté aux UV par la technique dénommée "lithographie par nanoimpression" (connue sous la dénomination anglo-saxonne "Nano Imprint").

Dans ce qui précède, on s'est contenté de décrire un élément de sécurité monocouche. Toutefois, dans bon nombre de situations, cet élément de sécurité sera multicouche et on se propose d'en décrire certains modes de réalisation, tout particulièrement en référence aux figures 32 à 36.

Ainsi, selon le mode de réalisation de la figure 32, on a affaire à un ensemble E qui présente un élément de sécurité 1 selon l'invention constitué d'un film plastique 3 couvert par un vernis embossable 4. Sur cet élément de sécurité sont déposées successivement des couches minces de chrome 5, d'oxyde de silice 6 et d'aluminium 7 et ce à titre d'illustration seulement. Bien entendu, d'autres empilements de couches minces avec d'autres matériaux et/ou un nombre de couches différent peuvent être envisagés pour produire des effets visuels remarquables. On procède ensuite à l'enlèvement localisé d'une partie de l'aluminium 7 pour créer des ouvertures 70.

Selon cette variante, l'observateur qui regarde cet ensemble à travers le film 3 constatera la combinaison de plusieurs effets optiques. Ainsi, les couches 5, 6 et 7 provoquent des effets de changement de couleur de la structure selon son angle d'observation, par exemple du magenta au vert. Cet effet de changement de couleur est associé aux variations progressives de l'angle du miroir courbe constitué par l'élément de sécurité 1, ce qui provoque un effet de synergie dans lequel le creux des gravures est teinté d'une couleur uniforme, tandis que les flancs changent progressivement de couleur jusqu'à une teinte verte. A noter ici que l'élément de sécurité 1 est représenté tourné de 90° par rapport à la réalité pour se situer dans le plan de la figure, ceci à des fins de bonne compréhension.

Dans le mode de réalisation de la figure 33, on a affaire successivement, de haut en bas, à un film plastique 3, un vernis embossable 4, une couche d'aluminium 7 présentant des ouvertures 70, une couche d'oxyde de silicium 6 et une couche de chrome 5. Sur cet ensemble de couches superposées est confectionné l'élément de sécurité 1.

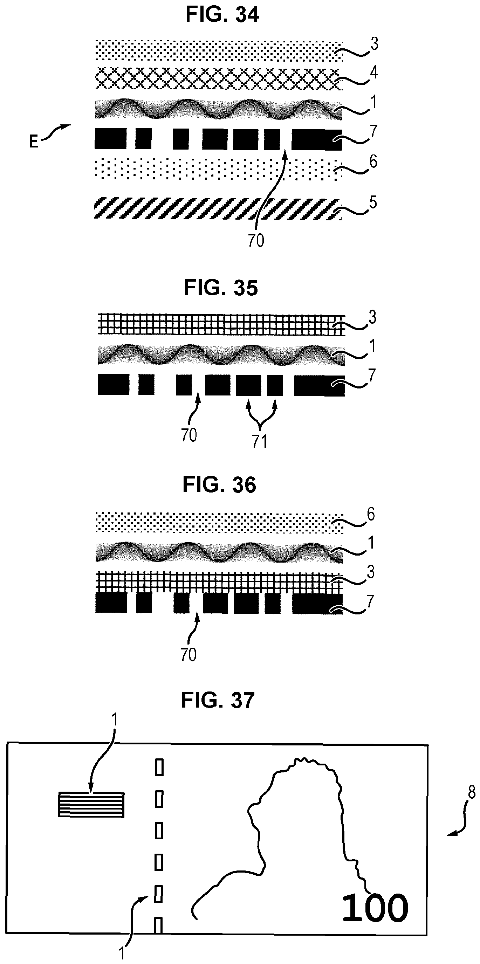

Encore un autre ensemble E est représenté à la figure 34, le côté d'observation étant celui de la couche mince de chrome 5.

Dans le mode de réalisation de la figure 35, on a affaire à un support 3 qui comporte en son sein ou à sa surface un effet de changement de couleur. Cela comprend un matériau multicouche à variation d'indice de réfraction ou au moins une encre à cristaux liquides. Ce support est revêtu d'un vernis 1 qui est déformé lors de son application par micro réplication à l'état humide (ou « Nano Imprint » en anglais) assisté aux UV, de sorte que la forme de l'outil gravé reproduise son empreinte dans le vernis. On recouvre ensuite le vernis d'une couche colorée 7, par exemple noire, de manière à révéler lors d'une observation au travers du support et à l'aplomb des zones imprimées 71 un effet combiné de changement de couleur et de miroir courbe. Dans les ouvertures 70 correspondant à des zones non revêtues d'encre noire, un effet de texte clair et transparent est réalisé.

Dans le mode de réalisation de la figure 36, le support vernis 3 est intercalé entre l'élément de sécurité 1 et la couche 7. De plus, en arrière de l'élément 1, est prévue une couche supplémentaire 6 dont l'indice de réfraction est suffisamment différent de celui du vernis du support vernis 3. On choisit préférentiellement cette couche parmi les vernis à haut indice de réfraction, par exemple du type ZnS, ou à bas indice de réfraction, de type perfluoropolyéther.

Bien entendu, des couches additionnelles servant à la fabrication d'éléments de sécurité tels que des fils, comme les couches de camouflage, de complexage avec un autre support plastique ou de thermoadhésifs, de protection, d'adhésif, n'ont pas été représentées sur les figures qui viennent d'être décrites, à des fins de simplification.

Comme montré à la figure 37, on a affaire à un billet de banque qui présente deux éléments de sécurité conformes à l'invention, à savoir en partie gauche un élément de sécurité 1 qui a la forme d'un bloc de forme rectangulaire (un "patch"), et vers la droite un élément 1 en forme de fil de sécurité en fenêtres.

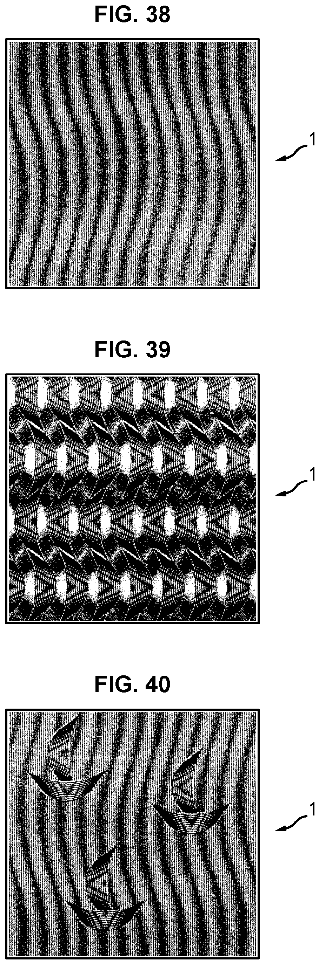

La figure 38 montre un exemple d'élément de sécurité 1 conforme aux enseignements de la présente invention, qui représente un motif de forme carré constitué d'une série de sous-ensembles de dix lignes dont les sinusoïdes sont en phase l'une par rapport à l'autre pour former le réseau R. Chacun de ces sous-ensembles est décalé verticalement par rapport à ses voisins de gauche et de droite. Ce décalage est régulier jusqu'au milieu de l'image ou il s'inverse. Il en découle un effet macroscopique de chevrons capables de se déplacer en fonction de l'inclinaison du support sur lequel l'élément 1 est introduit/apposé.

La figure 39 montre un deuxième exemple d'élément de sécurité 1 conforme aux enseignements de la présente invention, qui représente un motif de forme carré constitué d'une série de sous-ensembles formant des vagues stylisées à la manière de « La Grande vague de Kanagawa » de Hokusai.

Dans ce cas précis une vague est constitué de deux sous-ensembles. Le premier sous-ensemble est constitué de lignes incurvées dont l'intérieur s'élargit en passant par un maximum. Un second sous-ensemble lui est accolé et ses lignes sont incurvées dans le même sens que le premier mais l'intérieur se rétrécit en passant par un minimum. Cette paire de sous-ensembles accolés est répétée et ordonnée dans un pavage qui permet de ne pas laisser de vide entre elles. Il en découle un effet macroscopique de vagues capables de se déplacer en fonction de l'inclinaison du support sur lequel l'élément 1 est introduit/apposé.

Enfin, la figure 40 montre un troisième exemple d'élément de sécurité 1 conforme aux enseignements de la présente invention, qui représente un motif de forme carré constitué d'une série de sous-ensembles formant des motifs bateaux stylisés voguant sur une étendue d'eau. L'étendue d'eau est construite à la manière de la figure 38 et les bateaux sont construits à la manière de la figure 39, notamment avec un premier sous-ensemble constitué de lignes incurvées dont l'intérieur s'élargit en passant par un maximum formant la coque et, de manière identique, un autre sous-ensemble reproduisant la voile. Tous ces sous-ensembles sont superposés afin de former l'image globale représentée en figure 40.

Ces trois dernières figures montrent un faible aperçu des possibilités de création. Les possibilités d'agencement de ces sous-ensembles est virtuellement infini, de sorte que l'on peut réaliser n'importe quel type d'image plus ou moins figurative, plus ou moins stylisée.

## Revendications

1. Elément de sécurité (1) pour un document-valeur (8), qui comprend un réseau (R) d'au moins deux lignes contiguës ou adjacentes (2, 2', 2") chaque ligne comportant des bords longitudinaux et opposés (200, 210), au moins une de ces lignes (2) étant en relief et présentant deux flancs opposés, dont au moins un est en partie incliné (20, 21), qui prennent naissance chacun le long d'un desdits bords longitudinaux et opposés (200, 210) de ladite ligne (2), **caractérisé par le fait que** ladite ligne comporte seulement deux flancs opposés (20, 21) qui se rejoignent en une zone de jonction unique et ininterrompue (22), de forme sinueuse, qui s'étend selon la direction longitudinale de ladite ligne (2), lesdits flancs (20, 21) ne présentant aucune discontinuité ou interruption au moins dans ladite direction longitudinale, la projection de la zone de jonction (22) dans le plan du réseau (R) et la projection de la zone de jonction (22) dans le plan orthogonal au réseau (R) et parallèle aux lignes (2, 2',2") étant chacune décrites par une fonction continue et dérivable en tout point.

2. Elément (1) selon la revendication 1, **caractérisé par le fait que** ladite zone de jonction (22) a la forme d'une sinusoïde.

3. Elément (1) selon la revendication 2, **caractérisé par le fait que** ladite sinusoïde présente une période inchangée sur toute son étendue.

4. Elément (1) selon la revendication 2, **caractérisé par le fait que** ladite sinusoïde présente au moins une variation de période sur son étendue.

5. Elément (1) selon l'une des revendications 1 à 4, **caractérisé par le fait que** ledit réseau (R) présente une structure non périodique.

6. Elément (1) selon l'une des revendications 1 à 5, **caractérisé par le fait que** le relief desdites au moins deux lignes (2, 2', 2") présente une variation non périodique sur son étendue.

7. Elément (1) selon l'une des revendications 1 à 6, **caractérisé par le fait que** ladite zone de jonction (22) est parallèle ou sensiblement parallèle au plan (P) dans lequel sont contenus lesdits deux bords longitudinaux et opposés (200, 210).

8. Elément (1) selon l'une des revendications 1 à 7, **caractérisé par le fait que** ladite zone de jonction (22) est perpendiculaire ou sensiblement perpendiculaire au plan (P) dans lequel sont contenus lesdits deux bords longitudinaux et opposés (200, 210).

9. Elément (1) selon la revendication 7 ou 8, **caractérisé par le fait que** l'amplitude de ladite zone de jonction (22) est variable.

10. Elément (1) selon l'une des revendications 1 à 9, **caractérisé par le fait que** l'écartement entre ladite zone de jonction (22) et le plan (P) dans lequel sont contenus lesdits bords longitudinaux (200, 210) est constant ou variable.

11. Elément (1) selon l'une des revendications 1 à 10, **caractérisé par le fait que** ladite zone de jonction (22) consiste en une arête ou de préférence en un bandeau.

12. Elément (1) selon l'une des revendications 1 à 11, **caractérisé par le fait qu'**au moins l'un desdits flancs (20, 21) présente une pente rectiligne ou non rectiligne.

13. Elément (1) selon l'une des revendications précédentes, **caractérisé par le fait que** toutes les lignes (2, 2', 2") dudit réseau (R) présentent une largeur identique.

14. Elément (1) selon l'une des revendications précédentes, **caractérisé par le fait que** lesdites au moins deux lignes (2, 2', 2") ont un profil de relief non-triangulaire en largeur et/ou en longueur.

15. Elément (1) selon l'une des revendications 1 à 12 et 14, **caractérisé par le fait qu'**au moins une ligne (2, 2', 2") dudit réseau (R) présente une largeur différente de celle des autres lignes.

16. Elément (1) selon l'une des revendications précédentes, **caractérisé par le fait qu'**au moins une ligne (2, 2', 2") dudit réseau (R) présente une zone de jonction (22) de forme différente de celle des autres lignes.

17. Elément (1) selon l'une des revendications précédentes, **caractérisé par le fait que** lesdits flancs (20, 21) sont inclinés vers le haut ou vers le bas, relativement auxdits bords longitudinaux et opposés (200, 210).

18. Elément (1) selon l'une des revendications précédentes **caractérisé par le fait qu'**il comprend un ensemble multicouches (E), que ledit réseau (R) est intégré dans ledit ensemble (E) multicouche, et que cet ensemble multicouches comporte des couches additionnelles choisies dans le groupe constitué par les encres à colorants ou pigmentaires, les encres pigmentaires à changement de couleur, les cristaux liquides, les films plastiques multicouches à variation d'indice de réfraction, les filtres optiques interférentiels à couches minces, les métaux déposés sous vide.

19. Procédé de fabrication d'un outil d'embossage d'un élément (1) de sécurité selon l'une des revendications 1 à 18, **caractérisé par le fait qu'**il comprend au moins les étapes qui consistent à :
a) confectionner, c'est à dire fabriquer une image bidimensionnelle caractéristique d'une fraction d'une ligne (2, 2', 2") dudit réseau (R), cette image étant à niveaux multiples de gris, à chaque niveau de gris étant assignée une profondeur ou une altitude ;
b) répéter l'étape a) autant que nécessaire et assembler des fractions identiques ou différentes pour former une ligne de la forme et longueur voulue ;
c) Répéter les étapes a) et b) autant que nécessaire pour réaliser des lignes à rassembler de manière contigüe ou adjacente afin de former des sous-ensembles ;
d) le cas échéant, répéter les étapes de a) à c) de manière à réaliser le motif final;
e) à partir de l'image ou du motif final issu des étapes a) à d) ci-dessus, former une image tridimensionnelle dans laquelle chaque point de cette image présente un emplacement caractéristique dudit niveau de gris ;
f) procéder à la réalisation matérielle tridimensionnelle de celle-ci, de façon à obtenir une empreinte caractéristique de l'image issue de l'étape e).

20. Procédé selon la revendication 19, **caractérisé par le fait que** ladite origination est réalisée en mettant en oeuvre l'une ou l'autre des techniques suivantes : photolithogravure, notamment à niveaux de gris, lithographie laser, lithographie électronique ou lithographie à faisceau d'électrons.

21. Document-valeur, notamment billet de banque, **caractérisé par le fait qu'**il comporte au moins un élément de sécurité selon l'une des revendications 1 à 18.

## Patentansprüche

1. Sicherheitselement (1) für ein Wertdokument (8), das ein Netzwerk (R) aus mindestens zwei aneinandergrenzenden oder benachbarten Linien (2, 2', 2") umfasst, wobei jede Linie längsgerichtete und gegenüberliegende Kanten (200, 210) aufweist, wobei mindestens eine dieser Linien (2) im Relief ist und zwei gegenüberliegende Flanken, von denen mindestens eine teilweise geneigt (20, 21) ist, aufweist, die jeweils entlang einer der längsgerichteten und gegenüberliegenden Kanten (200, 210) der Linie (2) entstehen, **dadurch gekennzeichnet, dass** die Linie nur zwei gegenüberliegende Flanken (20, 21) aufweist, die in einem einzigen und ununterbrochenen Verbindungsbereich (22) mit gewundener Form zusammenlaufen, der sich in Längsrichtung der Linie (2) erstreckt, wobei die Flanken (20, 21) zumindest in dieser Längsrichtung keine Diskontinuität oder Unterbrechung aufweisen, wobei die Projektion des Verbindungsbereichs (22) in der Ebene des Netzwerks (R) und die Projektion des Verbindungsbereichs (22) in der orthogonalen Ebene zum Netzwerk (R) und parallel zu den Linien (2, 2', 2") jeweils von einer kontinuierlichen und in jedem Punkt ableitbaren Funktion beschrieben wird.

2. Element (1) nach Anspruch 1, **dadurch gekennzeichnet, dass** der Verbindungsbereich (22) die Form einer Sinuskurve hat.

3. Element (1) nach Anspruch 2, **dadurch gekennzeichnet, dass** die Sinuskurve über ihre gesamte Ausdehnung eine unveränderte Periode aufweist.

4. Element (1) nach Anspruch 2, **dadurch gekennzeichnet, dass** die Sinuskurve über ihre Ausdehnung mindestens eine Periodenvariation aufweist.

5. Element (1) nach einem der Ansprüche 1 bis 4, **dadurch gekennzeichnet, dass** das Netzwerk (R) eine nichtperiodische Struktur aufweist.

6. Element (1) nach einem der Ansprüche 1 bis 5, **dadurch gekennzeichnet, dass** das Relief der mindestens zwei Linien (2, 2', 2") über seine Ausdehnung eine nichtperiodische Variation aufweist.

7. Element (1) nach einem der Ansprüche 1 bis 6, **dadurch gekennzeichnet, dass** der Verbindungsbereich (22) parallel oder im Wesentlichen parallel zu der Ebene (P) ist, in der die beiden längsgerichteten und gegenüberliegenden Kanten (200, 210) enthalten sind.

8. Element (1) nach einem der Ansprüche 1 bis 7, **dadurch gekennzeichnet, dass** der Verbindungsbereich (22) senkrecht oder im Wesentlichen senkrecht zu der Ebene (P) ist, in der die beiden längsgerichteten und gegenüberliegenden Kanten (200, 210) enthalten sind.

9. Element (1) nach Anspruch 7 oder 8, **dadurch gekennzeichnet, dass** die Amplitude des Verbindungsbereichs (22) variabel ist.

10. Element (1) nach einem der Ansprüche 1 bis 9, **dadurch gekennzeichnet, dass** der Abstand zwischen dem Verbindungsbereich (22) und der Ebene (P), in der die längsgerichteten Kanten (200, 210) enthalten sind, konstant oder variabel ist.

11. Element (1) nach einem der Ansprüche 1 bis 10, **dadurch gekennzeichnet, dass** der Verbindungsbereich (22) aus einem Grat oder vorzugsweise aus einem Streifen besteht.

12. Element (1) nach einem der Ansprüche 1 bis 11, **dadurch gekennzeichnet, dass** mindestens eine der Flanken (20, 21) eine geradlinige oder nicht geradlinige Steigung aufweist.

13. Element (1) nach einem der vorhergehenden Ansprüche, **dadurch gekennzeichnet, dass** alle Linien (2, 2', 2") des Netzwerks (R) eine identische Breite aufweisen.

14. Element (1) nach einem der vorhergehenden Ansprüche, **dadurch gekennzeichnet, dass** die mindestens zwei Linien (2, 2', 2") ein nicht dreieckiges Reliefprofil in der Breite und/oder der Länge aufweisen.

15. Element (1) nach einem der Ansprüche 1 bis 12 und 14, **dadurch gekennzeichnet, dass** mindestens eine Linie (2, 2', 2") des Netzwerks (R) eine Breite aufweist, die sich von der der anderen Linien unterscheidet.

16. Element (1) nach einem der vorhergehenden Ansprüche, **dadurch gekennzeichnet, dass** mindestens eine Linie (2, 2', 2") des Netzwerks (R) einen Verbindungsbereich (22) mit einer anderen Form als die der anderen Linien aufweist.

17. Element (1) nach einem der vorhergehenden Ansprüche, **dadurch gekennzeichnet, dass** die Flanken (20, 21) relativ zu den längsgerichteten und gegenüberliegenden Kanten (200, 210) nach oben oder nach unten geneigt sind.

18. Element (1) nach einem der vorhergehenden Ansprüche, **dadurch gekennzeichnet, dass** es eine Mehrschichtanordnung (E) umfasst, dass das Netzwerk (R) in die Mehrschichtanordnung (E) integriert ist, und dass diese Mehrschichtanordnung zusätzliche Schichten aufweist, die aus der Gruppe ausgewählt sind, die aus Farbstoff- oder Pigmenttinten, Farbwechselpigmenttinten, Flüssigkristallen, mehrschichtigen Kunststofffolien mit variierendem Brechungsindex, optischen Dünnschicht-Interferenzfiltern, vakuumaufgetragenen Metallen besteht.

19. Verfahren zur Herstellung eines Prägewerkzeugs für ein Sicherheitselement (1) nach einem der Ansprüche 1 bis 18, **dadurch gekennzeichnet, dass** es mindestens die Schritte umfasst, die bestehen aus dem:
a) Konfektionieren, d. h. Herstellen eines zweidimensionalen Bildes, das charakteristisch für einen Bruchteil einer Linie (2, 2', 2") des Netzwerks (R) ist, wobei dieses Bild aus mehreren Graustufen besteht, wobei jeder Graustufe eine Tiefe oder eine Höhe zugeordnet ist;
b) Wiederholen von Schritt a) so oft wie nötig und Zusammensetzen gleicher oder unterschiedlicher Bruchteile, um eine Linie mit der gewünschten Form und Länge zu bilden;
c) Wiederholen der Schritte a) und b) so oft wie nötig, um Linien zu erstellen, die zusammenhängend oder benachbart zusammengesetzt werden sollen, um Untergruppen zu bilden;
d) gegebenenfalls Wiederholen der Schritte a) bis c), um das endgültige Motiv zu erstellen;
e) Erzeugen eines dreidimensionalen Bildes aus dem endgültigen Bild oder Motiv der oben genannten Schritte a) bis d), wobei jeder Punkt dieses Bildes eine charakteristische Stelle der Graustufe aufweist;
f) Durchführen der dreidimensionalen materiellen Umsetzung des Bildes, um einen Abdruck zu erhalten, der für das Bild aus Schritt e) charakteristisch ist.

20. Verfahren nach Anspruch 19, **dadurch gekennzeichnet, dass** die Originierung durch Anwendung einer der folgenden Techniken erfolgt: Fotolithografie, insbesondere mit Graustufen, Laserlithografie, Elektronenlithografie oder Elektronenstrahllithografie.

21. Wertdokument, insbesondere Banknote, **dadurch gekennzeichnet, dass** es mindestens ein Sicherheitselement nach einem der Ansprüche 1 bis 18 aufweist.

## Claims

1. A security element (1) for a valuable document (8), which comprises an array (R) of at least two contiguous or adjacent lines (2, 2', 2"), at least one of these lines (2) being in relief and having two opposite flanks, at least one of which is partly inclined (20, 21), which each originate along one of said longitudinal and opposite edges (200, 210) of said line (2), **characterized in that** said two opposite inclined flanks (20, 21) meet at a single and uninterrupted sinuous-shaped junction area (22) which extends along the longitudinal direction of said line (2), said flanks (20, 21) having no discontinuity or interruption at least in said longitudinal direction, the projection of the junction area (22) in the plane of the array (R) and the projection of the junction area (22) in the plane orthogonal to the array (R) and parallel to the lines (2, 2', 2") being each described by a continuous function differentiable at any point.

2. The element (1) according to claim 1, **characterized in that** said junction area (22) has the shape of a sinusoid.

3. The element (1) according to claim 2, **characterized in that** said sinusoid has an unchanged period over its entire extent.

4. The element (1) according to claim 2, **characterized in that** said sinusoid has at least one period variation over its extent.

5. The element (1) according to any of claims 1 to 4, **characterized in that** said array (R) has a non-periodic structure.

6. The element (1) according to any of claims 1 to 5, **characterized in that** the relief of said at least two lines (2, 2', 2") has a non-periodic variation over its extent.

7. The element (1) according to any of claims 1 to 6, **characterized in that** said junction area (22) is parallel or substantially parallel to the plane (P) in which said two longitudinal and opposite edges (200, 210) are contained.

8. The element (1) according to any of claims 1 to 7, **characterized in that** said junction area (22) is perpendicular or substantially perpendicular to the plane (P) in which said two longitudinal and opposite edges (200, 210) are contained.

9. The element (1) according to claim 7 or 8, **characterized in that** the amplitude of said junction area (22) is variable.

10. The element (1) according to any of claims 1 to 9, **characterized in that** the spacing between said junction area (22) and the plane (P) in which said longitudinal edges (200, 210) are contained is constant or variable.

11. The element (1) according to any of claims 1 to 10, **characterized in that** said junction area (22) consists of a ridge or preferably a stripe.

12. The element (1) according to any of claims 1 to 11, **characterized in that** at least one of said flanks (20, 21) has a rectilinear or non-rectilinear slope.

13. The element (1) according to any of the preceding claims, **characterized in that** all the lines (2, 2', 2") of said array (R) have an identical width.

14. The element (1) according to any of the preceding claims, **characterized in that** said at least two lines (2, 2', 2") have a non-triangular relief profile in width and/or in length.

15. The element (1) according to any of the preceding claims, **characterized in that** at least one line (2, 2', 2") of said array (R) has a width different from that of the other lines.

16. The element (1) according to any of the preceding claims, **characterized in that** at least one line (2, 2', 2") of said array (R) has a junction area (22) of a different shape from that of the other lines.

17. The element (1) according to any of the preceding claims, **characterized in that** said flanks (20, 21) are inclined upwards or downwards, relative to said longitudinal and opposite edges (200, 210).

18. The element (1) according to any of the preceding claims, **characterized in that** it comprises a multilayer assembly (E), and **in that** said array (R) is integrated in said multilayer assembly (E), these additional layers being chosen from the group consisting of the dye or pigment inks, the color-changing pigment inks, the liquid crystals, the multilayer plastic films with refractive index variation, the optical interference filters with thin layers, the vacuum-deposited metals.

19. A method for manufacturing an embossing tool of a security element (1) according to any of claims 1 to 18, **characterized in that** it comprises at least the steps consisting in:
a) making, i.e. manufacturing a two-dimensional image characteristic of a fraction of a line (2, 2', 2") of said array (R), this image having multiple levels of gray, a depth or an altitude being assigned to each gray level;
b) repeating step a) as much as necessary and assembling identical or different fractions to form a line of the desired shape and length;
c) repeating steps a) and b) as much as necessary to make lines to be assembled in a contiguous or adjacent manner in order to form sub-assemblies;
d) if necessary, repeating steps from a) to c) so as to achieve the final pattern;
e) from the image or the final pattern derived from steps a) to d) above, forming a three-dimensional image in which each point of this image has a location characteristic of said gray level;
f) proceeding with the three-dimensional hardware production thereof, so as to obtain an imprint characteristic of the image derived from step e).

20. The method according to claim 19, **characterized in that** said origination is carried out by implementing either of the following techniques: photolithography, in particular gray-level photolithography, laser lithography, electronic lithography or electron-beam lithography.

21. A valuable document, in particular banknote, **characterized in that** it includes at least one security element according to any of claims 1 to 18.
